Europäisches Patentamt

European Patent Office

Office européen des brevets

(19)

(11) Numéro de publication : **0 155 893 B1**

(12) **FASCICULE DE BREVET EUROPÉEN**

(45) Date de publication du fascicule du brevet :
**09.08.89**

(51) Int. Cl.⁴ : **H 05 B   6/80**

(21) Numéro de dépôt : **85420033.4**

(22) Date de dépôt : **26.02.85**

(54) **Appareil de réaction chimique par voie humide de produits divers.**

(30) Priorité : **02.03.84 FR 8403496**

(43) Date de publication de la demande :
**25.09.85 Bulletin 85/39**

(45) Mention de la délivrance du brevet :
**09.08.89 Bulletin 89/32**

(84) Etats contractants désignés :
**AT BE CH DE FR GB IT LI LU NL SE**

(56) Documents cités :
**FR—A— 2 128 935**
**GB—A— 2 081 442**
**GB—A— 2 122 859**

(73) Titulaire : **SOCIETE PROLABO, Société Anonyme**
**12, rue Pelée**
**F-75011 Paris (FR)**

(72) Inventeur : **Commarmot, Roger**
**5, Impasse de la Garde**
**F-69005 Lyon (FR)**
Inventeur : **Didenot, Dominique**
**8, rue Ampère**
**F-69330 Meyzieu (FR)**
Inventeur : **Gardais, Jean-François**
**Le Verdier**
**F-38200 Chuzelles (FR)**

(74) Mandataire : **Ropital-Bonvarlet, Claude et al**
**Cabinet BEAU DE LOMENIE 99, Grande rue de la**
**Guillotière**
**F-69007 Lyon (FR)**

Jouve, 18, rue St-Denis, 75001 Paris, France

## Description

La présente invention concerne le domaine technique de la réaction chimique de composés minéraux, organiques ou organo-métalliques.

On sait qu'il est nécessaire, avant la plupart des traitements d'analyse de composés tels que ci-dessus, de procéder à une réaction chimique, par exemple une minéralisation par voie humide au moyen d'acides concentrés, comme l'acide sulfurique, l'acide nitrique, l'acide perchlorique, ou des mélanges de ces acides ou, encore, une saponification par la potasse alcoolique, une oxydation ou une réduction.

Pour mener à bien un tel traitement d'analyse préalable, une méthode classique consiste à disposer dans un vase, par exemple du type matras, une dose de composé à analyser, ainsi que le volume complémentaire nécessaire de réactif concentré spécifique.

Le vase est ensuite chauffé et surveillé en permanence par un opérateur qui a la charge de régler, périodiquement, les calories transmises au vase, pour éviter l'apparition de mousses et le débordement du produit. L'opérateur doit, également, agiter, périodiquement mais de façon fréquente, le mélange soumis à échauffement, afin d'entretenir une bonne homogénéité du composé dissous et chauffé.

Une telle surveillance est longue, fastidieuse et susceptible de provoquer des accidents physiques, parfois graves pour l'opérateur, par les risques d'explosion, de projections de la composition et par l'émanation de fumées et vapeurs corrosives.

En plus des inconvénients ci-dessus, il faut noter que la méthode ainsi appliquée ne permet pas de contrôler efficacement l'éventuel départ de fractions des produits entrant dans la composition de base et entraînées par les fumées et vapeurs qui s'échappent du col du vase. Il s'ensuit que le résultat ultérieur d'analyse s'en trouve fortement perturbé, sans qu'un moyen de contrôle ne puisse apporter une possibilité d'évaluation de l'existence et de l'importance de ce facteur négatif aléatoire.

Pour tenter de parfaire un tel procédé, différentes propositions d'amélioration ont été développées et mises en œuvre.

C'est ainsi qu'on a proposé des installations mettant en œuvre, en tant que moyen de chauffage, au lieu d'une flamme directe, une batterie de creusets à rayonnement infra-rouge dont la puissance de chacun peut être réglée en agissant sur une alimentation électrique propre. Une telle batterie de creusets est associée à un collecteur de fumées commun à l'ensemble des creusets et relié à un groupe de pompage.

Si ces modifications ont apporté une certaine amélioration, en revanche, elles ne permettent pas de régler les problèmes de la surveillance permanente, de l'agitation et de l'incertitude des résultats obtenus, étant donné que ces trois facteurs sont toujours fonction de l'attention permanente d'un ou de plusieurs opérateurs.

Par ailleurs, il doit être considéré que la conduite d'une telle installation exige un savoir-faire certain. En effet, le réglage de la puissance de chauffe de chaque creuset doit être évalué en fonction de l'inertie thermique d'un tel appareil et exige, par conséquent, une très bonne expérience pour apprécier le facteur d'anticipation à retenir pour l'augmentation mais aussi pour l'abaissement de la température imposée à un échantillon.

Toujours dans le but d'améliorer un tel procédé de traitement préalable d'analyse, on a proposé d'utiliser, en tant que générateur de chaleur, un four micro-ondes muni d'une prise d'aspiration des fumées et vapeurs.

Le brevet américain 4 080 168 enseigne une telle proposition et préconise la mise en œuvre d'un four micro-ondes dans la cavité duquel est placé un vase contenant l'échantillon à traiter.

Cette technique présente des avantages certains, car l'application de micro-ondes permet une répartition quasi uniforme de l'énergie et donc un chauffage à cœur du composé à traiter. Pour les mêmes raisons, une telle technique permet de briser les mousses qui se développent avec la technique précédente lors de la montée en température du composé. Une surveillance permanente de l'évolution du traitement n'est donc plus nécessaire théoriquement et libère ainsi un opérateur de cet aspect fastidieux et dangereux de la méthode antérieure.

En outre, un four micro-ondes est connu pour ses propriétés d'absence d'inertie thermique, ce qui permet de régler plus précisément l'énergie transmise à l'échantillon.

On s'est, cependant, aperçu qu'un tel appareil ne donnait pas encore satisfaction. On a, en effet, constaté qu'un certain nombre de produits ne pouvaient pas être traités, en raison, notamment, de l'ébullition rapide du réactif additionné.

Dans d'autres cas, on a constaté que la conduite du procédé de minéralisation ne pouvait pas être menée à bien sans intervention fréquente d'un opérateur, comme dans le cas de chauffage par rampe traditionnelle, en raison du fait qu'un tel four ne permet pas de contrôler précisément l'énergie appliquée. Dans ce cas, une telle technique est alors affectée des mêmes inconvénients que ceux rappelés ci-dessus.

Par ailleurs, on a constaté aussi que les résultats d'analyse ultérieure n'étaient pas toujours précis et faisaient intervenir un facteur d'incertitude non négligeable pour certains produits, voire rédhibitoire pour d'autres. Plus précisément, on a pu constater une perte de certains produits, perte mise au compte d'un entraînement de fractions de ces produits par les fumées et vapeurs importantes, par évaporation sélective et/ou par effet de primage.

EP 0 155 893 B1

En raison de la forte vaporisation, on a aussi constaté une forte pollution de la cavité d'application exigeant une opération de nettoyage des parois de cette cavité après chaque réaction et avant de procéder au traitement subséquent d'un échantillon de même nature ou non.

La forte évaporation du ou des réactifs pose, par ailleurs, un problème d'ordre pratique difficile à résoudre. Dans le cas le plus fréquent où l'opérateur doit nécessairement intervenir pour, périodiquement, extraire et replacer l'échantillon dans la cavité d'application, on conçoit que la préhension du vase ne doit poser aucun problème. Or, en raison de la forte évaporation, la face extérieure de la paroi du vase est recouverte d'une couche de gouttelettes qui risquent d'avoir des conséquences graves sur l'environnement lorsque le réactif utilisé est un acide, comme dans le cas de minéralisation ou d'oxydation.

La forte évaporation a aussi pour résultat négatif de développer, à l'intérieur de la cavité où le récipient est placé, un brouillard de vapeur s'opposant à toute appréciation visuelle du déroulement de la réaction en cours.

La mise en œuvre de la technique préconisée par ce brevet US ne peut donc pas être envisagée pratiquement dans le domaine industriel. Ceci a d'ailleurs été perçu depuis déjà quelques temps, puisque la publication BARRETT, DAVIDOWSKI, PENARO, COPELAND, anal. Chem. 1978-50, 1021 a fait paraître une technique améliorée et dérivée de l'enseignement de ce brevet US et visant à réduire, sans les supprimer, les inconvénients découlant de la forte vaporisation.

Une autre proposition a aussi été faite par la publication GB-A-2 081 442 dans laquelle un four micro-ondes délimite une cavité d'application apte à contenir plusieurs récipients suspendus par leurs cols. Les ouvertures supérieures des récipients s'ouvrent dans un collecteur de fumées et vapeurs qui sont aspirées extérieurement.

Une telle proposition peut être considérée comme résolvant uniquement le problème de la pollution de la cavité d'application et de la surface extérieure des récipients. Par contre, tous les autres problèmes énumérés ci-avant subsistent.

La présente invention a pour objet un nouvel appareil de réaction chimique par voie humide, mettant toujours en œuvre l'application de micro-ondes, mais dont la structure particulière permet justement de supprimer les inconvénients des méthodes actuelles et, plus précisément, de ceux attachés à la technique selon le brevet US 4 080 168.

Les caractéristiques structurelles de l'appareil selon l'invention ont, par ailleurs, permis de constater l'obtention de résultats surprenants dans la conduite du traitement de minéralisation de certains produits.

L'appareil de réaction chimique par voie humide conforme à l'invention est caractérisé en ce qu'il comprend une cavité d'application :

— présentant dans son dessus une ouverture en permanence ouverte, de section égale, au jeu près, à la plus grande mesure de la capacité prise perpendiculairement à l'axe du col, afin que le récipient puisse être introduit dans la cavité par l'ouverture,

— ayant, au moins à l'aplomb de l'ouverture, une hauteur sensiblement égale à la hauteur de la capacité,

— et comportant une cheminée bordant l'ouverture et s'élevant sur une hauteur fonction de la fréquence d'émission des micro-ondes et de la section de passage de l'ouverture pour former une barrière d'absorption s'opposant à la propagation de micro-ondes à l'extérieur de la cavité.

Diverses autres caractéristiques ressortent de la description faite ci-dessous en référence aux dessins annexés qui montrent, à titre d'exemple non limitatif, une forme de réalisation de l'objet de l'invention.

La fig. 1 est une vue schématique illustrant un appareil faisant application des moyens de l'invention.

La fig. 2 est une élévation longitudinale de l'un des éléments constitutifs de l'invention.

La fig. 3 est une vue de dessus prise selon la ligne III-III de la fig. 2.

La fig. 4 et la fig. 5 sont des coupes-élévations prises, respectivement, selon les lignes IV-IV et V-V de la fig. 3.

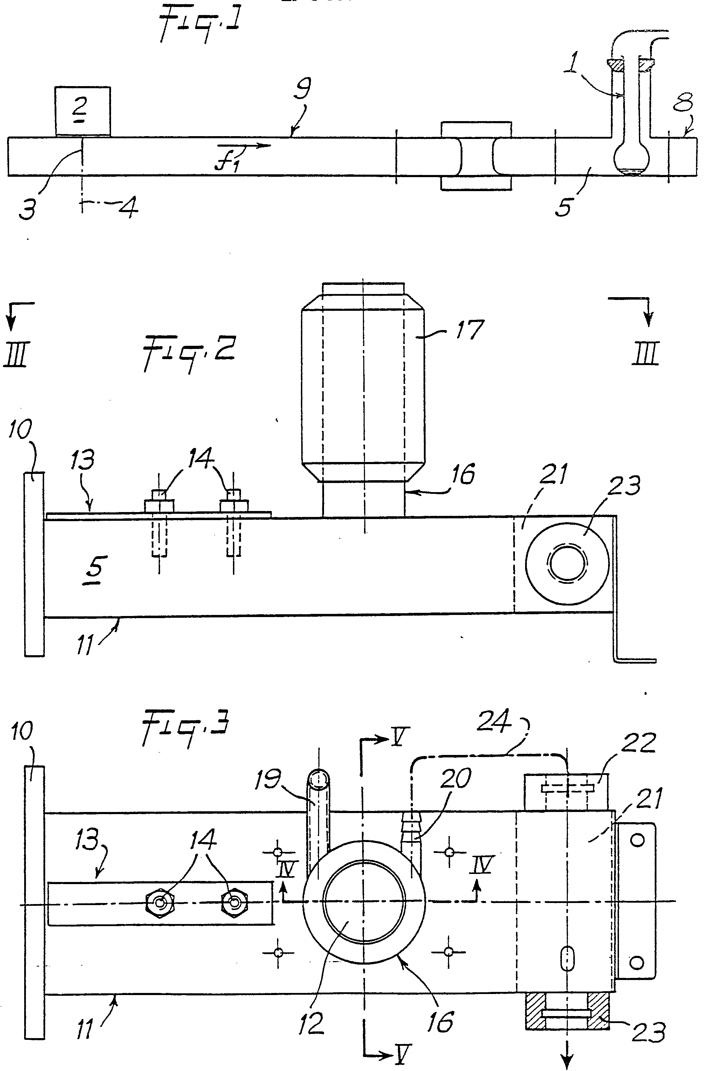

La fig. 1 montre, de façon schématique, un appareil destiné à soumettre à une réaction chimique par voie humide un composé disposé dans un récipient 1 dans lequel on introduit, également, au moins un réactif spécifique.

L'appareil comprend un générateur de micro-ondes 2 comportant une antenne 3 émettant, à partir d'un plan émissif 4, des micro-ondes dans une cavité d'application 5 dans laquelle le récipient 1 doit être placé.

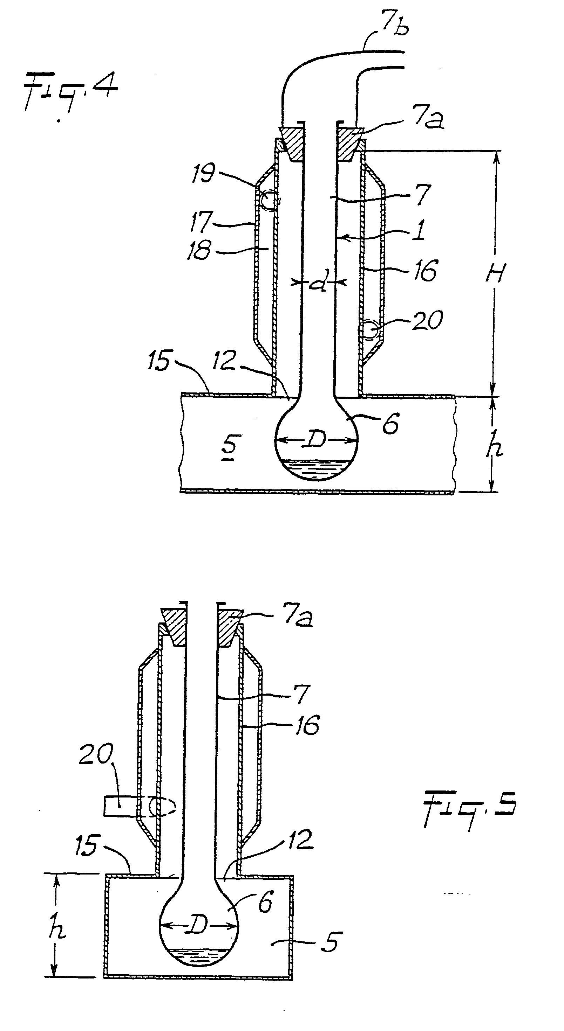

Selon l'invention, le récipient 1, tel que représenté à la fig. 4, est réalisé en verre pour comporter, à sa base, une capacité de rétention 6 de forme au moins semi-sphérique et prolongée par un col 7 de grande longueur, de section cylindrique constante. De préférence, le récipient 7 est conformé de telle manière que la capacité 6 s'apparente à un volume sensiblement sphérique, tel qu'un bulbe, dont le diamètre D, pris perpendiculairement à l'axe du col 7, est supérieur à celui d de ce dernier. Le récipient 1 pourrait aussi être réalisé, par exemple, en polycarbonate et présenter une forme différente, en fonction de la nature du composé et de la réaction chimique à lui faire subir. Ainsi, le récipient 1 pourrait être cylindrique à fond plat ou semi-sphérique.

La cavité 5 est, dans le cas présent, constituée par le segment terminal 8 d'un guide d'ondes 9. Le

3

segment 8 comporte des moyens techniques habituellement mis en œuvre pour assurer et améliorer le cheminement et la propagation des micro-ondes émises par l'antenne 3 dans une direction générale de propagation selon la flèche $f_1$. Le segment 8, tel qu'illustré par les fig. 2 à 5, présente, à partir d'une bride de raccordement 10, une section constante, sensiblement équivalente à celle du guide 9. Le segment 8 est, par exemple, constitué par une enveloppe parallélépipédique 11 réalisée en acier inoxydable ou en laiton. L'enveloppe 11 comporte, dans sa paroi horizontale supérieure, une ouverture 12 circulaire, en permanence ouverte et dont le diamètre est égal, au jeu près, au diamètre D de la capacité 6 du récipient 1. L'ouverture circulaire 12 est située à une distance déterminée du plan émissif 4, de manière que son axe vertical corresponde, sensiblement, à une zone de formation d'un ventre par les ondes émises par l'antenne 3 et se propageant dans le sens de la flèche $f_1$. Afin d'assurer cette correspondance, l'enveloppe 11 est munie d'un dispositif d'accord 13 placé entre la bride 10 et l'ouverture 12. De préférence, le dispositif d'accord 13 est constitué par deux tiges métalliques 14 portées, de façon réglable, par la paroi supérieure 15 du segment 8 pour s'étendre selon une direction perpendiculaire à l'axe longitudinal de l'enveloppe 11 à l'intérieur de cette dernière, en étant placées toutes les deux sur l'axe longitudinal du segment.

Les fig. 4 et 5 montrent une caractéristique constructive importante de l'invention selon laquelle la cavité 5 présente, au moins à l'aplomb de l'ouverture 12, une hauteur h correspondant sensiblement par excès au diamètre D. Ainsi, seule la capacité 6 du récipient peut être disposée à l'intérieur de la cavité 5 en étant introduite par l'ouverture 12, alors que le col 7 s'élève au-dessus de la paroi 15.

L'ouverture 12 est bordée par une cheminée tubulaire 16 de forme cylindrique, de section constante. La cheminée 16 s'élève sur une hauteur H choisie en fonction de la section de l'ouverture 12 et de la fréquence d'émission des micro-ondes, de manière à constituer une barrière d'absorption s'opposant à la propagation de ces micro-ondes à l'extérieur de la cavité 5. Dans tous les cas, il est prévu de réaliser le récipient 1 de telle sorte que le col 7 présente une longueur supérieure à la dimension H. Cette mesure excédentaire est prévue pour l'adaptation d'une coupelle ou analogue 7a de suspension et de centrage du récipient par rapport à la cheminée 16. Ceci permet de faire coïncider l'axe du vase et l'axe de la cheminée et de placer ainsi précisément la capacité 6 en coïncidence avec la position théorique du ventre de l'onde devant se développer au droit de l'ouverture 12. La coupelle 7a sert, également, de siège d'appui à un capuchon ou couvercle 7b relié à un groupe de pompage des fumées et vapeurs.

La cheminée 16 est entourée par un manchon 17 délimitant une chambre annulaire 18. Le manchon 17 comporte deux tubulures 19 et 20 de raccordement à un circuit de mise en circulation d'un fluide approprié, permettant de réguler la température de la cheminée et, par conséquent, de celle du col 7 en fonction de la réaction chimique à conduire. Le fluide de régulation de température est, par exemple, constitué par de l'eau.

L'extrémité de l'enveloppe 11, opposée à la bride 10 par rapport à la cheminée 7, est, de préférence, occupée par une chambre 21 piège à eau. Cette chambre est en relation avec deux raccords 22 et 23 rapportés sur les faces latérales de l'enveloppe 11 pour la liaison avec un circuit de circulation d'eau. Selon une disposition préférée de l'invention, le raccord 22, correspondant à l'admission, est relié par une canalisation 24 à la tubulure 20 de sortie de la chambre annulaire 18.

La chambre 21 pourrait être remplacée par un absorbeur sec ou, éventuellement encore, supprimée à condition que le taux d'ondes stationnaires en cours d'application reste admissible par le générateur et n'abrège pas de façon sensible sa durée de vie.

La mise en œuvre des caractéristiques structurelles ci-dessus a permis d'éliminer les inconvénients des solutions techniques antérieures et d'obtenir, dans la conduite des réactions chimiques diverses, des résultats surprenants, voire inattendus, en mettant en œuvre les caractéristiques ci-dessous chiffrées concernant un exemple d'appareil selon l'invention.

| | |
|---|---|
| Puissance du générateur | 200 W |
| Fréquence d'émission | 2,45 GHz |
| Longueur de l'enveloppe 11 à partir de la bride 10 | 290 mm |
| Hauteur h de l'enveloppe 11 | 47 mm |
| Largeur de l'enveloppe 11 | 90 mm |
| Diamètre de l'ouverture 12 | 42 mm |
| Distance de l'ouverture 12 par rapport à la bride 10 | 170 mm |
| Hauteur de la cheminée 16 | 121 mm |
| Diamètre de la cheminée 16 | 42 mm |
| Diamètre D de la capacité 6 | 38 mm |
| Diamètre d du col 7 | 22 mm |
| Longueur du col 7 | 150 mm |

Les exemples ci-dessous donnent des résultats obtenus avec un tel appareil et fournissent les résultats enregistrés pour des mêmes échantillons de produits, avec les méthodes antérieures connues.

A — Réaction de minéralisation.

## Exemple 1

| - Huile succinimide C 5935 fabriquée par la société OROGIL | 200 mg |
| - Acide sulfurique | 4 ml |
| - Catalyseur Kjeldahl | 3 g |

| Rampe infrarouge | 6 heures. |
| Four micro-ondes (Type LMI, modèle LAB 607, 600 W) | Procédé interrompu en raison du départ de l'acide sulfurique et de l'obtention d'une masse charbonneuse. Pollution du four et du récipient. |
| Invention | 1 heure à 120 W ou 18 min à 200 W. Absence de pollution. |

## Exemple 2

| - Monochlorhydrate de LYSINE | 50 mg |
| - Acide sulfurique | 4 ml |
| - Catalyseur Kjeldahl | 3 g |

| Rampe infrarouge | > 1 heure. |
| Four micro-ondes | Arrêt de la réaction après 15 min (Temps chauffage + temps refroidissement) car vaporisation de $H_2SO_4$. Obtention d'une solution jaunâtre. N = 15,2 %. Pollution de l'enceinte. |
| Invention | 28 min comprenant 2 min à 60 W et 26 min à 120 W. Solution limpide et incolore. N = 15,2 %. Absence de pollution. |

## Exemple 3

| - PVC n° 140 fabriqué par RHONE-POULENC | 210 mg |
| - Acide sulfurique | 5 ml |
| - Acide nitrique | 2 ml |

| Rampe infrarouge | 16 heures. Ajout de plus de 10 ml d'acide nitrique. |
| Four micro-ondes | 50 min comprenant le temps d'exposition + le temps de manipulation + le temps de refroidissement. Difficultés de conduite dues à la puissance de chauffe et au dégagement de vapeurs nitreuses. Ajout de plus de 8 ml d'acide nitrique. |
| Invention | 45 min comprenant six séquences successives d'oxydation à 100 W et d'élimination à 120 W. Ajout de plus de 8 ml d'acide nitrique. Absence de pollution. |

## Exemple 4

| - Phosphonate | 60 mg |
| - Acide sulfurique | 3 ml |
| - Acide nitrique | 0,2 ml |
| - Eau oxygénée | 0,2 ml |

| Rampe infrarouge | 4 heures. P = 14,79 %. |
| Four micro-ondes | 33 min. P = 15,2 %. Apparition d'un brouillard acide très épais et pollution. |
| Invention | 40 min — 120 W. P = 14,78 %. Absence de pollution. |

Exemple 5

| | |
|---|---|
| - Protéine d'œuf | 50 mg |
| - Acide sulfurique | 4 ml |
| - Catalyseur Kjeldahl | 3 g |

| | |
|---|---|
| Rampe infrarouge | 1 heure. N = 13 %. |
| Four micro-ondes | Temps d'exposition : 6 minutes 30 secondes. Surveillance constante (présence de mousses). Liquide clair. N + 13 %. |
| Invention | 9 min à 120 W (initial 80 W) ou 6 min à 200 W. N = 13 %. Absence de mousse. Pas de surveillance. |

B. — Réaction d'oxydation.

Exemple 1

| | |
|---|---|
| - Hastelloy B | 320 mg |
| - Eau régale | 5 ml |

| | |
|---|---|
| Rampe infrarouge | 1 à plusieurs jours. Réaction souvent incomplète. |
| Four micro-ondes | Temps de chauffe + refroidissement = 10 min. Temps fin de réaction > 10 min. Réaction très difficile à contrôler (temps de chauffage très court) en raison de l'ébullition du mélange acide. Pertes et pollution. |
| Invention | 12 min − 55 W. Attaque complète. Absence de pollution. |

Exemple 2

Mesure de la D. C. O. (Demande chimique en oxygène) selon la norme française NF 90 101. Cette norme précise que la réaction doit être réalisée à reflux durant 2 heures, à l'aide d'un réfrigérant (pour éviter les pertes de substances oxydables volatiles)

| | |
|---|---|
| - Solution d'urée à 1,2 g/l | 1 ml |
| - Réactifs selon norme soit : | |
| sulfate mercurique | 100 mg |
| acide sulfurique, AgNO$_3$ | 1 cm$^3$ |
| K$_2$Cr$_2$O$_7$ à 0,25 N | 3 cm$^3$ |

| | |
|---|---|
| Réaction selon la norme | DCO = 0 mg/l (Temps = 2 heures). |
| Rampe infrarouge | DCO = 0 mg/l (Temps = 2 heures). |
| Four micro-ondes | L'ébullition du milieu est tellement rapide (< 10 secondes) qu'il n'a pas été possible, malgré surveillance, d'éviter le débordement des réactifs et la perte d'une partie de l'échantillon dans le four. Dans ce type de matériel il est impossible d'appliquer la norme en raison de l'impossibilité de faire intervenir un réfrigérant. |
| Invention | DCO = 0 mg/l (Temps = 15 minutes). Respect de la norme, montage du réfrigérant aisé en dehors de la cheminée. Absence de débordement par contrôle de la puissance. |

Exemple 3

Mesure de la DCO.

| | |
|---|---|
| - Effluent de la station d'épuration RHONE POULENC ST FONS (rejets 5019) | 0,25 ml |
| - Réactifs selon norme soit : | |
| sulfate mercurique | 100 mg |
| acide sulfurique, AgNO$_3$ | 1 cm$^3$ |
| K$_2$Cr$_2$O$_7$ à 0,25 N | 3 cm$^3$ |

| Réaction selon la forme | DCO = 4 500 mg/l (Temps = 2 heures). |
| Rampe infrarouge | DCO = 4 500 mg/l (Temps = 2 heures). |
| Four micro-ondes | L'ébullition du milieu est tellement rapide (< 10 secondes) qu'il n'a pas été possible, malgré surveillance, d'éviter le débordement des réactifs et la perte d'une partie de l'échantillon dans le four. Dans ce type de matériel il est impossible d'appliquer la norme en raison de l'impossibilité de faire intervenir un réfrigérant. |
| Invention | DCO = 4 550 mg/l (Temps = 15 minutes). Puissance appliquée = 100 W. Le résultat est identique après 2 heures. Respect de la norme, montage du réfrigérant aisé en dehors de la cheminée. Absence de débordement par contrôle de la puissance. |

C — Réaction de saponification et/ou hydrolyse.

Détermination du chlore hydrolysable dans des composés chlorés (à reflux) selon la norme américaine ASTM D 2441-68.

Exemple 1

| - 1,1,1, Trichloroéthane commercialisée sous la marque « FLUKA » | 48 mg |
| - Soude méthanolique à 1,1 M | 10 ml |

| Réaction selon la forme ASTM (plaque chauffante ou rampe) | Cl = 0,30 % (1 heure) |
| Four micro-ondes | Différence avec la norme : on ne peut pas installer de réfrigérant. Après moins de 10 secondes d'exposition on observe une mini-explosion dans le matras avec pertes quasi totales. Absence de mesures. |
| Invention (selon la norme) | Cl = 0,38 % 8 minutes et Puissance appliquée = 40 W. |

Exemple 2

| - Mélange de 1,2,3 et 1,2,4 trichlobenzène RP TRI-A n° EC 80-2 | 4 g |
| - Soude méthanolique 0,1 M | 10 ml |

| Réaction selon la norme ATSM (plaque chauffante ou rampe) | Cl = 5 ppm (1 heure). |
| Four micro-ondes | Différence avec la norme : on ne peut pas installer de réfrigérant. Après moins de 10 secondes d'exposition on observe une mini-explosion dans le matras avec pertes quasi totales. Absence de mesures. |
| Invention (selon la norme) | Cl = 3 ppm 80 W − 8 minutes. Résultat identique 80 W − 60 min temps de la norme. |

La comparaison des résultats ci-dessus permet de constater que la mise en œuvre des caractéristiques structurelles de l'appareil selon l'invention assure :
- une absence totale de pollution du matériel selon l'invention,
- un procédé propre permettant les manipulations sans précautions particulières,
- une possibilité de traitement de produits qui, jusqu'à présent, ne pouvaient être traités qu'avec une durée de réaction particulièrement longue, selon la technique traditionnelle ou ne pouvaient l'être avec la technique selon le brevet US n° 4 080 168,
- un gain de temps de traitement notable, voire très important, par rapport à la méthode traditionnelle,
- un gain de puissance et, par conséquent, de consommation d'énergie élevé par rapport aux techniques traditionnelles,
- une possibilité de travailler à reflux selon l'exigence de normes nationales ou internationales.

Un autre avantage de l'objet de l'invention réside dans le fait que la présence de la chambre annulaire 17 permet de moduler et de réguler la température du col 7, malgré la montée en température du produit placé dans le bulbe 6. Ceci permet de favoriser, selon le type de réaction, soit un refroidissement favorable à une condensation des vapeurs le long du col 7, soit un réchauffement de ce dernier dans le cas, notamment, de phase de minéralisation par réduction pour assurer l'évaporation des produits de réaction, comme dans l'exemple A-3. Dans un tel cas, la communication entre la chambre 21 et la chambre 18 est supprimée, la chambre 18 étant alors placée en relation avec un circuit d'apport d'un fluide dont la température est régulée en fonction de la réaction mise en œuvre.

• Un autre avantage encore réside dans le fait que l'extrémité supérieure ouverte du col est accessible et permet d'adaptation du matériel spécifique à la réaction à conduire, comme une colonne de réfrigération selon les exemples B-2 et 3 ou les exemples C-1 et 2.

L'invention n'est pas limitée à l'exemple décrit et représenté, car diverses modifications peuvent y être apportées sans sortir de son cadre.

## Revendications

1. Appareil de réaction chimique par voie humide de produits divers, comprenant un générateur (2) de micro-ondes, une cavité (5) d'application des micro-ondes, destinée à contenir un récipient (1) contenant un échantillon de produit à traiter et au moins un réactif spécifique de ce produit, ledit récipient étant réalisé en un matériau transparent, transmettant les micro-ondes, inerte au produit et à son réactif, et formant une capacité (6) de rétention du produit et du réactif, prolongée par un col (7) ouvert sensiblement cylindrique, caractérisé en ce qu'il comprend une cavité d'application (7) :

présentant dans son dessus une ouverture (12) en permanence ouverte, de section égale, au jeu près, à la plus grande mesure de la capacité (6) prise perpendiculairement à l'axe du col, afin que le récipient (1) puisse être introduit dans la cavité (5) par l'ouverture (12),

ayant, au moins à l'aplomb de l'ouverture (12), une hauteur (h) sensiblement égale à la hauteur de la capacité (6),

et comportant une cheminée (16) bordant l'ouverture (12) et s'élevant sur une hauteur (H) fonction de la fréquence d'émission des micro-ondes et de la section de passage de l'ouverture pour former une barrière d'absorption s'opposant à la propagation de micro-ondes à l'extérieur de la cavité.

2. Appareil selon la revendication 1, caractérisé en ce qu'il comprend une chambre annulaire (17) entourant la cheminée et qui est en relation avec un circuit de circulation d'un fluide de régulation de la température du col du récipient.

3. Appareil selon la revendication 1, caractérisé en ce que le récipient (1) comporte une capacité de rétention (6) en forme de bulbe sensiblement sphérique.

4. Appareil selon la revendication 1, caractérisé en ce que la cavité d'application (5) est constituée par un guide d'ondes dans lequel le générateur émet.

5. Appareil selon la revendication 4, caractérisé en ce que l'ouverture (12) est pratiquée à une distance du plan d'émission de l'antenne du générateur correspondant sensiblement à une zone de formation d'un ventre des ondes émises.

6. Appareil selon la revendication 1 ou 4, caractérisé en ce que l'extrémité du guide d'ondes, situé à l'opposé du générateur par rapport à l'ouverture, est équipée d'une chambre-piège à eau (21).

7. Appareil selon la revendication 6, caractérisé en ce que la chambre piège eau (21) est raccordée à la sortie (20) de la chambre annulaire (18) de la cheminée.

8. Appareil selon la revendication 1, caractérisé en ce que le récipient (1) comporte un col (7) ayant une longueur supérieure à la hauteur (H) de la cheminée (16) bordant l'ouverture (12) et muni à son extrémité supérieure d'une coupelle (7a) de support et de centrage par rapport à la cheminée.

9. Appareil selon la revendication 8, caractérisé en ce que la coupelle (7a) sert de siège d'appui à un couvercle ou capuchon (7b) d'aspiration des vapeurs et fumées.

## Claims

1. Apparatus for the chemical reaction by wet process of various products, comprising a micro-wave generator (2), a cavity (5) of application of the micro-waves adapted to contain a recipient (1) containing a sample of product to be treated, with at least one specific reagent of said product, said recipient being produced in a transparent material, transmitting the micro-waves, inert to the product and to its reagent, and forming a container portion (6) for retention of the product and its reagent, extended by a substantially open neck (7), characterized in that it comprises a cavity of application (7) :

presenting in its top a permanently open opening (12), of section equal, to within the clearance, to the largest measurement of the container portion (6) taken perpendicularly to the axis of the neck so that the recipient (1) can be introduced into the cavity (5) through the opening (12),

having at least perpendicularly to the opening (12), a height (h) substantially equal to the height of the container portion (6), and

EP 0 155 893 B1

comprising a stack (16) bordering the opening (12) and rising over a sufficient height (H) as a function of the section of passage of the opening in order to form an aborption barrier opposing the propagation of micro-waves outside the cavity.

2. Apparatus according to claim 1, characterized in that it comprises an annular chamber (17) surrounding the stack and which is in relation with a circuit for the circulation of a fluid regulating the temperature of the neck of the recipient.

3. Apparatus according to claim 1, characterized in that the recipient (1) comprises a container portion (6) for retention in the form of a substantially spherical bulb.

4. Apparatus according to claim 1, characterized in that the cavity of application (5) is constituted by a wave guide into which the generator emits.

5. Apparatus according to claim 4, characterized in that the opening (12) is made at a distance from the plane of emission of the antenna of the generator corresponding substantially to a zone of formation of an antinode of the wave emitted.

6. Apparatus according to claim 1 or 4, characterized in that the end of the wave guide, located opposite the generator with respect to the opening, is equipped with a water trap chamber (21).

7. Apparatus according to claim 6, characterized in that the water trap chamber (21) is connected to the outlet (20) of the annular chamber (18) of the stack.

8. Apparatus according to claim 1, characterized in that the recipient (1) comprises a neck (7) having a length greater than the height (H) of the stack (16) bordering the opening (12) and provided at its upper end with a stopper (7a) for support and centering with respect to the stack.

9. Apparatus according to claim 8, characterized in that the stopper (7a) serves as seat for supporting a cover (7b) or hood for aspiration of the vapours and fumes.


**Patentansprüche**

1. Vorrichtung für die chemische Reaktion auf naßem Weg von verschiedenen Produkten mit einem Mikrowellengenerator (2) und einer Vertiefung (5) zur Anwendung der Mikrowellen und zur Aufnahme eines Gefäßes (1) mit der Probe des zu behandelnden Produkts und mindestens einer speziellen, mit dem Produkt reagierenden Verbindung, wobei das Gefäß aus durchsichtigem, die Mikrowellen durchlassenden, gegenüber dem Produkt und der damit reagierenden Verbindung inerten Material ist und einen Retentionsraum (6) für das Produkt und der damit reagierenden Verbindung bildet, der durch einen im wesentlichen zylindrischen offenen Hals (7) verlängert ist, gekennzeichnet durch eine Anwendungsvertiefung (5) mit

oben einer ständigen Öffnung (12) mit einem Querschnitt, der mit Spiel der größten, senkrecht zur Achse des Halses gemessenen Abmessung des Raums (6) gleich ist, um das Gefäß (1) in den Raum (5) durch die Öffnung (12) einführen zu können,

einer Höhe (h), die zumindest senkrecht zur Öffnung (12) im wesentlichen gleich der Höhe des Raums (6) ist und

einem Kamin (16) am Rand der Öffnung (12) mit einer Höhe (H), abhängig von der Emissionsfrequenz der Mikrowellen und des Durchgangsquerschnitts der Öffnung, zur Bildung einer Absorptionsbarriere, die der Ausbreitung der Mikrowellen außerhalb des Raums entgegenwirkt.

2. Vorrichtung nach Anspruch 1, gekennzeichnet durch eine ringförmige Kammer (17) um den Kamin, die mit einem Kreislauf einer Temperaturregelflüssigkeit für den Gefäßhals in Verbindung steht.

3. Vorrichtung nach Anspruch 1, gekennzeichnet durch ein Gefäß (1) mit einem Retentionsraum (6) im wesentlichen in Form eines Rundkolbens.

4. Vorrichtung nach Anspruch 1, dadurch gekennzeichnet, daß die Anwendungsvertiefung (5) aus einem Wellenhohlleiter, in den der Generator sendet, besteht.

5. Vorrichtung nach Anspruch 4, dadurch gekennzeichnet, daß sich die Öffnung (12) in einer Entfernung der Emissionsebene der Generatorantenne befindet, die im wesentlichen dem Bildungsbereich eines Bauchs der ausgesandten Strahlen entspricht.

6. Vorrichtung nach Anspruch 1 oder 4, dadurch gekennzeichnet, daß das Ende des Wellenholleiters, das in bezug auf die Öffnung dem Generator entgegengesetzt ist, mit einer Wasserfalle (21) ausgerüstet ist.

7. Vorrichtung nach Anspruch 6, dadurch gekennrzeichnet, daß die Wasserfalle (21) mit dem Ausgang (20) der ringförmigen Kammer (18) des Kamins verbunden ist.

8. Vorrichtung nach Anspruch 1, gekennzeichnet durch ein Gefäß (1) mit einem Hals (7) einer größeren Länge als die Höhe (H) des Kamins (16) am Rand der Öffnung (12) und am oberen Ende einer Kupelle (7a) zur Halterung und Zentrierung des Gefäßes in bezug auf den Kamin.

9. Vorrichtung nach Anspruch 8, dadurch gekennzeichnet, daß die Kupelle (7a) als Stütze für einen Ansaugdeckel oder eine Ansaugkappe (7b) der Dämpfe und der Abgase dient.

Fig.1

Fig.2

Fig.3

Fig. 4

Fig. 5